# EUROPEAN PATENT SPECIFICATION

(11) **EP 0 429 787 B1**
(45) Date of publication and mention of the grant of the patent: **03.04.1996**
(21) Application number: 90117889.7
(22) Date of filing: 18.09.1990
(51) Int. Cl.: G06F 13/42

(54) **Data transfer apparatus**
Datenübertragungsvorrichtung
Appareil de transmission de données

(30) Priority: 29.11.1989 JP 311262/89
(43) Date of publication of application: 05.06.1991
(73) Proprietor: MITSUBISHI DENKI KABUSHIKI KAISHA, Tokyo 100 (JP)
(72) Inventor: Ito, Yoshiaki, c/o Mitsubishi Denki Kabushiki K., Kamakura-shi, Kanagawa-ken (JP); Inoue, Masahiro, c/o Mitsubishi Denki Kabushiki K., Kamakura-shi, Kanagawa-ken (JP); Higuma, Toshiyasu, c/o Mitsubishi Denki Kabushiki, Kamakura-shi, Kanagawa-ken (JP); Sakanobe, Kazunori, c/o Mitsubishi Denki Kabushiki, Kamakura-shi, Kanagawa-ken (JP)
(74) Representative: Eisenführ, Speiser & Partner

(56) References cited:
- WO-A-87/05135
- US-A- 3 988 716
- COMPUTER DESIGN. vol. 20, no. 8, August 1981, LITTLETON, MASSACHUSETTS US pages 154 - 159; P.R. RONY: 'Interface Fundamentals: 3-Wire Handshake Using two Microcomputers'

## Description

### Field of the Invention

The present invention relates to a data transfer apparatus for use in transmission and reception of data between microprocessors.

### Description of the Prior Art

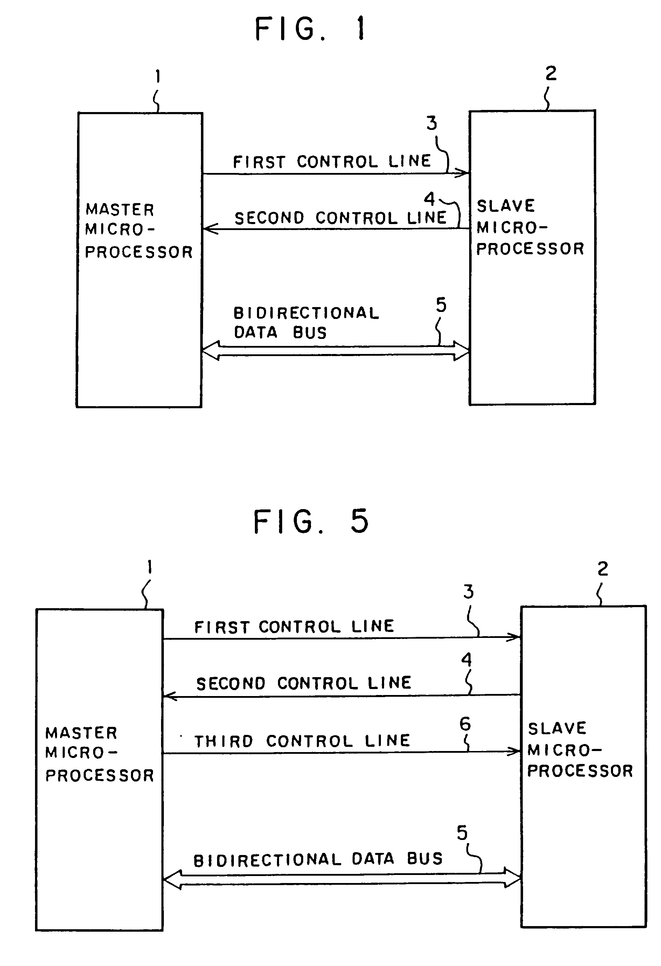

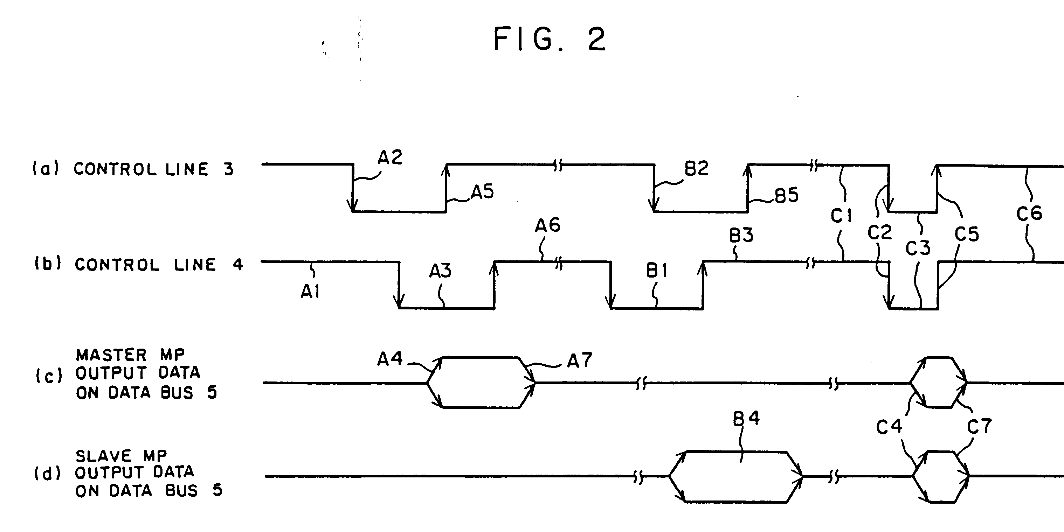

Fig. 1 shows the constitution of an exemplary conventional apparatus for transferring data between microprocessors as disclosed in Japanese Patent Laid-open No. 60 (1985)-214138, wherein there are included a master microprocessor 1 and a slave microprocessor 2. Another example of an apparatus for transferring data between two processors is disclosed in the document "Computer Design", vol. 20 n°8, August 1981, Littleton Massachusetts, USA, p.154-159, P.R. RONY "Interface fundamentals : 3 wire hardshaking using two microcomputers". The two microprocessors 1, 2 are connected to each other via first and second control lines 3, 4 and a bidirectional data bus 5. Fig. 2 is a timing chart showing the operations performed in such conventional apparatus, wherein (a) and (b) represent the operation of the control lines 3 and 4, respectively; (c) represents a data output from the master microprocessor to the bidirectional data bus 5; and (d) represents a data output from the slave microprocessor 2 to the bidirectional data bus 5.

Now the apparatus operation will be described below. First, an explanation will be given with regard to the operation performed when data is transmitted from the master microprocessor 1 to the slave microprocessor 2. The master microprocessor 1 detects whether the control line 4 is at a high level or not, then judges the bidirectional data bus 5 to be available in the case of a high level (A1) and turns the control line 3 to a low level (A2) for informing the slave microprocessor 2 of an intention for transmission of data. The slave microprocessor 2 turns the control line 4 to a low level (A3) after detecting such turn of the control line 3 to a low level, and then is set ready for reception (in a reception request state). In response to the reception ready state of the slave microprocessor 2 subsequently to turn of the control line 4 to a low level, the master microprocessor 1 outputs the data to the bidirectional data bus 5 (A4) while turning the control line 3 to a high level (A5). And in accordance with such turn of the control line 3 to a high level, the slave microprocessor 2 detects that the data on the bidirectional data bus 5 is valid, and receives the data while turning the control line 4 to a high level (A6). Due to the turn of the control line 4 to a high level, the master microprocessor 1 discerns termination of receiving the data by the slave microprocessor 2, and then releases the bidirectional data bus 5 (A7).

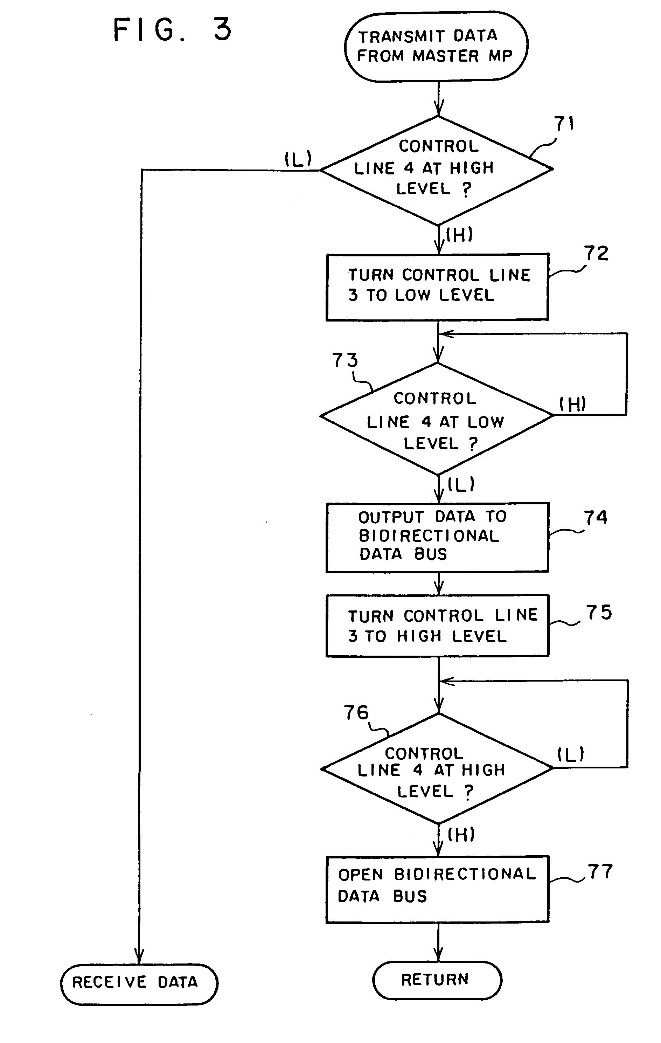

Fig. 3 is a flow chart of the procedure carried out by the microprocessors in implementing the above-described timing chart. Steps 71 to 77 show the operating procedure of the master microprocessor 1. A step 71 is a routine for detecting whether the bidirectional data bus 5 is available or not. When the control line 4 is at a low level, the master microprocessor 1 receives the data since it signifies that the slave microprocessor 2 captures the bidirectional data bus 5 earlier to start transmission of the data. In case the control line 4 is at a high level, the operation proceeds to a step 72, where the control line 3 is turned to a low level so that a transmission request is sent to the slave microprocessor 2. In a step 73, a decision is made as to whether the control line 4 is at a low level. And if a low level is detected, the slave microprocessor 2 is judged to be in a reception ready state, and then the data is outputted to the bidirectional data bus 5 in a step 74. Subsequently in a step 75, the control line 3 is turned to a high level, and the slave microprocessor 2 is thereby informed of the fact that the data on the bidirectional data bus 5 is valid. In a next step 76, a detection is executed as to whether the control line 4 is at a high level or not. And in the case of a high level, the slave microprocessor 2 is judged to have terminated reception of the data, and then the bidirectional data bus 5 is released in a step 77.

Now a description will be given with regard to the operation performed when the master microprocessor 1 receives the data from the slave microprocessor 2. First the master microprocessor 1 detects that the control line 4 is at a low level (B1) and thereby discerns the presence of a transmission request from the slave microprocessor 2, and thereafter turns the control line 3 to a low level (B2) so as to inform the slave microprocessor 2 of a reception ready state. Then the slave microprocessor 2 detects such a state and outputs (B4) the data to the bidirectional data bus 5 while turning the control line 4 to a high level (B3). Upon detection of such turn of the control line 4 to a high level, the master microprocessor 1 discerns that the data on the bidirectional data bus 5 is valid and, after receiving the data, turns the control line 3 to a high level (B5), thereby informing the slave microprocessor 2 of termination of receiving the data. And in response thereto, the slave microprocessor 2 releases the bidirectional data bus 5.

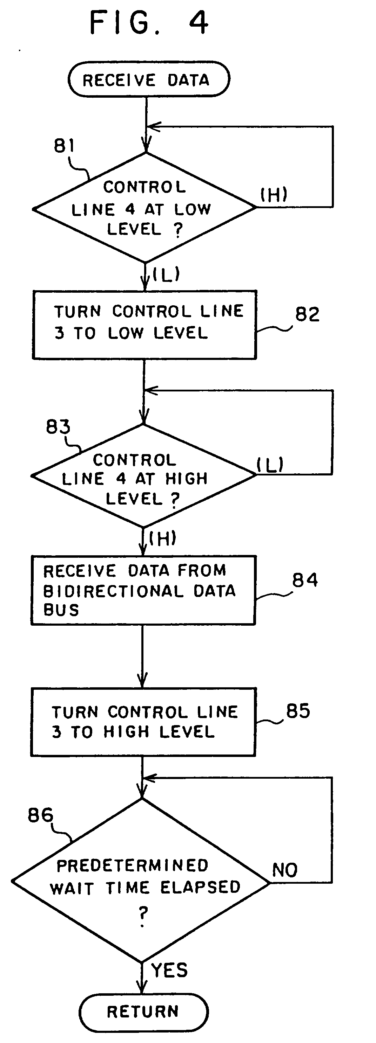

Fig. 4 is a flow chart of the procedure carried out by the microprocessor in implementing the above timing chart of data receiving operation. This flow chart also shows the operating procedure of the master microprocessor 1. In a step 81, a decision is made as to whether the control line 4 is at a low level or not. And in the case of a low level, the master microprocessor 1 discerns the presence of a transmission request from the slave microprocessor 2 and turns the control line 3 to a low level in a step 82, thereby informing the slave microprocessor 2 of a reception ready state. In a step 83, a decision is made as to whether the control line 4 is at a high level or not. And in the case of a high level, it signifies that valid data is outputted to the bidirectional data bus 5 from the slave microprocessor 2, so that such data is received in a step 84. In a next step 85, the control line 3 is turned to a high level to inform the slave microprocessor 2 of termination of receiving the data. Subsequently in a step 86, a decision is made as to whether a predetermined time has elapsed or not. And if the result of such decision is affirmative, the procedure is completed with the bidirectional data bus 5 judged to be available.

However, a problem arises in such conventional data transfer apparatus when there occurs simultaneous generation of outgoing data in both microprocessors 1 and 2 as represented by C1 through C7 in Fig. 2. In such a case, the microprocessors 1, 2 confirm at a time C1 that the control lines 3, 4 are at a high level respectively, and then turn the control lines 3, 4 to a low level substantially simultaneously at a time C2. Thereafter, since the control lines 3, 4 are at a low level (C3), the two microprocessors 1, 2 output the data simultaneously to the data bus 5 bidirectionally as represented by C4. In this case, there arises a problem of data collision on the bidirectional data bus 5 to consequently bring about a possibility of damaging the respective ports of the two microprocessors 1, 2 connected to the bidirectional data bus 5. And at a subsequent time C5, the control lines 3, 4 are turned to a high level for informing the other side of the fact that the data has been outputted via the bidirectional data bus 5. Since the control lines 3, 4 are thus turned to a high level, it is supposed at a time C6 that the data reception has been completed on the other side, whereby the bidirectional data bus 5 is released at a time C7. In such conventional data transfer apparatus, the control line for a transmission request is used also as the control line for informing the other side of a reception ready state so as to reduce the number of connection lines between the two microprocessors. Therefore, when transmission requests are generated simultaneously in both microprocessors, accurate data transfer fails to be performed with certainty, and furthermore a serious fault is induced as the data collide with each other on the bidirectional data bus to eventually cause damage to the ports of the microprocessors.

### SUMMARY OF THE INVENTION

The present invention has been accomplished in an attempt to solve the problems mentioned. And its object resides in providing an improved data transfer apparatus which is capable of ensuring exact data transfer with certainty despite simultaneous generation of transmission requests in both microprocessors.

For the purpose of achieving the above object, the data transfer apparatus of the present invention is equipped with a third control line for sending a data transmission permit/inhibit signal from a master microprocessor to a slave microprocessor.

The above and other objects and features of the present invention will be apparent in detail from the following description which will be given with reference to the illustrative accompanying drawings.

### BRIEF DESCRIPTION OF THE DRAWINGS

Fig. 1 is a block diagram showing the constitution of a conventional data transfer apparatus;
Fig. 2 is a timing chart of the operation performed in the apparatus of Fig. 1;
Fig. 3 is a flow chart of the data transmission procedure executed by a master microprocessor in the apparatus of Fig. 1;
Fig. 4 is a flow chart of the data reception procedure executed by the master microprocessor in the apparatus of Fig. 1;
Fig. 5 is a block diagram showing the constitution of an exemplary data transfer apparatus embodying the present invention;
Fig. 6 is a timing chart of the operation performed in the apparatus of Fig. 5;
Fig. 7 is a flow chart of the data transmission procedure executed by a master microprocessor in the apparatus of Fig. 5; and
Fig. 8 is a flow chart of the data transmission procedure executed by a slave microprocessor in the apparatus of Fig. 5.

### DETAILED DESCRIPTION OF THE PREFERRED EMBODIMENTS

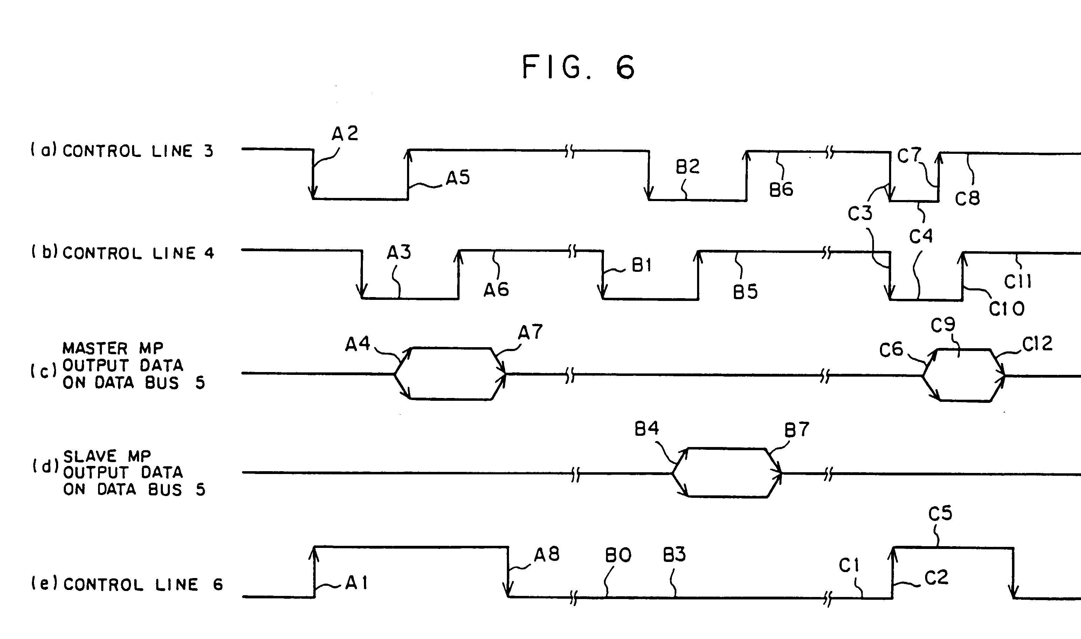

Hereinafter a preferred embodiment of the present invention as it is defined in appended claims 1-5 will be described with reference to the accompanying drawings. Fig. 5 shows the constitution of an exemplary apparatus embodying the present invention for data transfer between microprocessors, wherein a third control line 6 is additionally provided for connecting two microprocessors 1 and 2 to each other. Any other arrangement are the same as those of the aforementioned conventional apparatus. In Fig. 5, a first control line 3 is used by the master microprocessor 1 for outputting a transmission request signal and a reception request signal, and a second control line 4 is used by a slave microprocessor 2 for outputting a transmission request signal and a reception request signal; and the third control line 6 is used by the master microprocessor 1 for informing the slave microprocessor 2 of permission or inhibition of data transmission from the latter.

Fig. 6 is a timing chart of the operations performed in the above apparatus, wherein (a) and (b) represent the operation of the control lines 3 and 4, respectively; (c) represents a data output from the master microprocessor 1 to the bidirectional data bus 5; (d) represents a data output from the slave microprocessor 2 to the bidirectional data bus 5; and (e) represents the operation of the control line 6, i.e. the operation of a transmission permit signal outputted from the master microprocessor 1.

Now a description will be given with regard to the operation performed when data is transmitted from the master microprocessor 1 to the slave microprocessor 2. First, upon generation of transmission data, the master microprocessor 1 turns the control line 6 from a low level to a high level (A1), thereby placing the slave microprocessor 2 in a data transmission inhibit state. Subsequently, in order to send a transmission request to the slave microprocessor 2, the control line 3 is turned to a low level (A2). In response thereto, the slave microprocessor 2 turns the control line 4 to a low level (A3) and is thereby placed in a reception ready state. Then the master microprocessor 1 detects such reception ready state of the slave microprocessor 2 and outputs (A4) the data to the bidirectional data bus 5 while turning the control line 3 to a high level (A5). Upon detection of such level turn, the slave microprocessor 2 discerns that the data on the bidirectional data bus 5 is valid, and after receiving the data, turns the control line 4 to a high level (A6). The master microprocessor 1 detects such level turn to consequently discern the termination of receiving the data, and then releases the bidirectional data bus 5 (A7) while turning the control line 6 to a low level (A8), thereby releasing the slave microprocessor 2 from the transmission inhibit state.

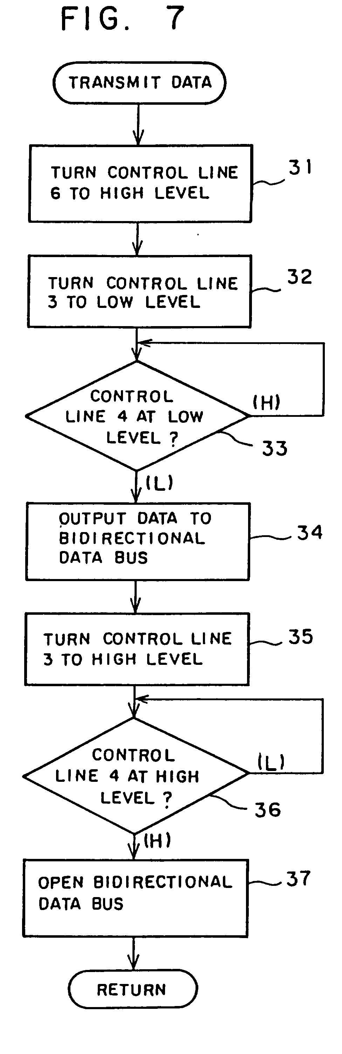

Fig. 7 is a flow chart of the procedure carried out in implementing the timing chart of such data transmission by the microprocessor. First in a step 31, the master microprocessor 1 turns the control line 6 to a high level to inhibit transmission from the slave microprocessor 2. In a step 32, the control line 3 is turned to a low level to execute a transmission request. Next in a step 33, a decision is made as to whether the control line 4 is at a low level or not. And in the case of a low level, the data is outputted to the bidirectional data bus 5 in a step 34, and thereafter the control line 3 is turned to a high level in a step 35 to inform the slave microprocessor 2 of the data output. Subsequently in a step 36, a decision is made as to whether the control line 4 is at a high level or not. And in the case of a high level, it signifies that the slave microprocessor 2 has completely received the data. Therefore the bidirectional data bus 5 is opened in a step 37, and the control line 6 is turned to a low level to release the slave microprocessor 2 from the transmission inhibit state.

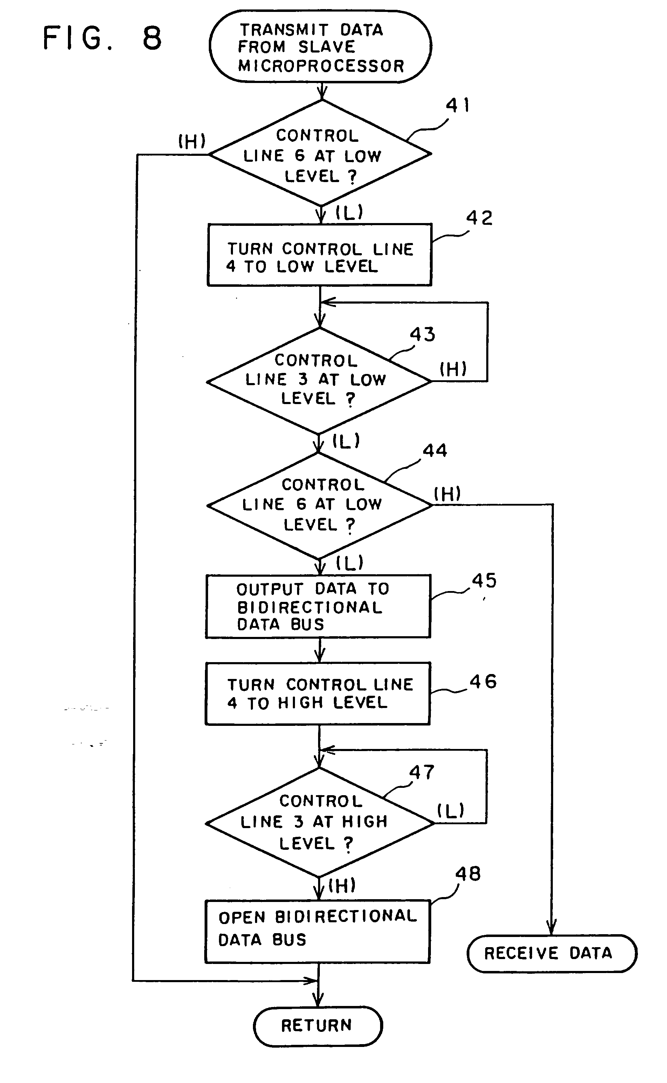

Referring now to a flow chart of Fig. 8, a description will be given with regard to the operation performed when data is transmitted from the slave microprocessor 2 to the master microprocessor 1. Upon generation of outgoing data, the slave microprocessor 2 makes a decision in a step 41 as to whether the control line 6 is at a low level or not. And in the case of a low level (B0), it signifies that data transmission to the master microprocessor 1 is permitted. Therefore, in a step 42, the control line 4 is turned to a low level (B1) and a transmission request is executed. Subsequently in steps 43 and 44, decisions are made as to whether the control lines 3, 6 are at a low level or not. And in the case of a low level (B2) (B3), it is supposed that the master microprocessor 1 is set ready for data reception. Then the data is outputted (B4) to the bidirectional data bus 5 in a step 45, and the control line is turned to a high level (B5) in a step 46, thereby informing the master microprocessor 1 of the data output. In a next step 47, a decision is made as to whether the control line 3 is at a high level or not, and in the case of a high level (B6), it signifies termination of receiving the data. And finally in a step 48, the bidirectional data bus 5 is released (B7).

Hereinafter a description will be given with regard to the operation performed upon simultaneous generation of outgoing data in both microprocessors 1 and 2. The slave microprocessor 2 detects that the control line 6 is at a low level (C1), and then confirms the state where data transmission to the master microprocessor is permitted. Due to generation of outgoing data also in the master microprocessor 1 immediately thereafter, the master microprocessor 1 turns the control line 6 to a high level (C2), thereby inhibiting data transmission from the slave microprocessor 2. Subsequently the two microprocessors 1, 2 turn the control lines 3, 4 to a low level (C3) for executing a transmission request. Then the master microprocessor 1 discerns (C4) that the slave microprocessor 2 is in a reception ready state. Meanwhile the slave microprocessor 2 detects (C4) that the control line 3 is at a low level and, since the control line 6 is also at a high level (C5), the slave microprocessor 2 discerns that the turn to a low level relative to the master microprocessor 1 is caused not by the reception ready state but by the generation of outgoing data on the other side also. Accordingly the slave microprocessor 2 interrupts any further data transmission thereafter and proceeds to the procedure of data deception. Meanwhile the master microprocessor 1 successively outputs (C6) the outgoing data to the bidirectional data bus 5, thereby turning the control line 3 to a high level (C7). Upon detection of such turn to a high level (C8), the slave microprocessor 2 receives (C9) the data from the bidirectional data bus 5 and turns the control line 4 to a high level (C10). Subsequently the master microprocessor 1 detects (C11) such turn of the level and then releases the bidirectional data bus (C12).

Referring now to the flow chart of Fig. 8 again, a description will be given with regard to the operation of the slave microprocessor 2 performed upon simultaneous generation of outgoing data in the two microprocessors 1 and 2. In a step 41, a decision is made as to whether the control line 6 is at a low level or not. And in the case of a high level, data transmitting operation is inhibited. When the level is low, it signifies a transmission permit state, so that the control line 4 is turned to a low level in a step 42 and then the data transmission is started. In a step 43, a decision is made as to whether the control line 3 is at a low level or not. And in the case of a low level, the master microprocessor 1 is judged to be in a reception ready state. Next in a step 44, a decision is made as to whether the control line 6 is at a low level or not. And in the case of a high level, it signifies that the master microprocessor 1 has started data transmission, so that the slave microprocessor 2 interrupts its data transmitting operation and proceeds to the data reception. When the control line 6 is at a low level, the data is outputted to the bidirectional data bus 5 in a step 45, and then the control line 4 is turned to a high level in a step 46. Subsequently in a step 47, a decision is made as to whether the control line 3 is at a high level or not. And in the case of a high level, it is regarded as termination of receiving the data, and thereafter the bidirectional data bus 5 is released in a step 48 to complete the data transmitting operation.

According to the present invention, as described hereinabove, a signal for permitting or inhibiting data transmission is sent from the master microprocessor to the slave microprocessor, and upon simultaneous generation of outgoing data in the two microprocessors, priority is given to the data transmission from the master microprocessor, hence preventing collision of the respective data on the bidirectional data bus to consequently ensure desired data transfer with certainty.

Such transmission permit-inhibit signal is usable not merely at simultaneous generation of outgoing data in the master microprocessor but also upon occurrence of any synchronism error during the data transfer to the slave microprocessor. In the latter case, proper synchronism can be resumed by once placing the slave microprocessor in a transmission inhibit state.

Furthermore, the bidirectional data bus is applicable to either of serial and parallel data transfer.

## Claims

1. A data transfer apparatus for transmitting and receiving data between a master microprocessor (1) and a slave microprocessor (2), comprising:
a bidirectional data bus (5) connected between said two microprocessors (1, 2) and serving to transmit data therethrough bidirectionally;
characterized by
a first control line (3) for sending a data transmission request signal and a data reception request signal from said master microprocessor (1) to said slave microprocessor (2);
a second control line (4) for sending a data transmission request signal and a data reception request signal from said slave microprocessor (2) to said master microprocessor (1); and
a third control line (6) for sending a data transmission permit/inhibit signal from said master microprocessor (1) to said slave microprocessor (2) for permitting/inhibiting data transmission from said slave microprocessor (2).

2. A data transfer apparatus according to claim 1, wherein said bidirectional data bus (5) is a serial type.

3. A data transfer apparatus according to claim 1, wherein said bidirectional data bus (5) is a parallel tpye.

4. A data transfer apparatus according to claim 1, wherein the master processor (1) makes the first control line (3) to be active and the third control line (6) to be in the inhibiting state before the master processor (1) sends a data.

5. A data transfer apparatus according to claim 1, wherein the slave microprocessor (2) confirms a state of the third control line (6) and makes the second control line (4) to be active if the state of the third control line (6) is permissible before the slave microprocessor (2) sends a data.

## Patentansprüche

1. Datenübertragungsvorrichtung zum Senden und Empfangen von Daten zwischen einem Haupt-Mikroprozessor (1) und einem Neben-Mikroprozessor (2), mit:
einem bidirektionalen Datenbus (5), welcher zwischen den zwei Mikroprozessoren (1, 2) angeschlossen ist und dadurch zur bidirektionalen Datensendung dient;
gekennzeichnet durch
eine erste Steuerungsleitung (3) zum Senden eines Datensendeanforderungssignals und eines Datenempfangsanforderungssignals von dem Haupt-Mikroprozessor 81) zu dem Neben-Mikroprozessor (2);
eine zweite Steuerungsleitung (4) zum Senden eines Datensendeanforderungssignals und eines Datenempfangsanforderungssignals von dem Neben-Mikroprozessor (2) zum dem Haupt-Mikroprozessor (1); und
eine dritte Steuerungsleitung (6) zum Senden eines Datensende-Erlaubnis/ Verbots-Signals von dem Haupt-Mikroprozessor (1) zu dem Neben-Mikroprozessor (2) zum Erlauben/Verbieten einer Datensendung von dem Neben-Mikroprozessor (2).

2. Datenübertragungsvorrichtung nach Anspruch 1, bei welcher der bidirektionale Datenbus (5) ein serieller Typ ist.

3. Datenübertragungsvorrichtung nach Anspruch 1, bei welcher der bidirektionale Datenbus (5) ein paralleler Typ ist.

4. Datenübertragungsvorrichtung nach Anspruch 1, bei welcher der Haupt-Mikroprozessor (1) die erste Steuerungsleitung (3) aktiviert und die dritte Steuerungsleitung (6) in den Verbotszustand versetzt, bevor der Haupt-Mikroprozessor (1) Daten sendet.

5. Datenübertragungsvorrichtung nach Anspruch 1, bei welcher der Neben-Mikroprozessor (2) einen Zustand der dritten Steuerungsleitung (6) bestätigt und die zweite Steuerungsleitung (4) aktiviert, wenn der Zustand der dritten Steuerungsleitung (6) eine Erlaubnis anzeigt, bevor der Neben-Mikroprozessor (2) Daten sendet.

## Revendications

1. Appareil de transfert de données pour transmettre et pour recevoir des données entre un microprocesseur maître (1) et un microprocesseur esclave (2), comprenant :
un bus de données bidirectionnel (5) relié entre lesdits deux microprocesseurs (1, 2) et servant à transmettre des données de façon bidirectionnelle ;
caractérisé par
une première ligne de commande (3) pour envoyer un signal de demande de transmission de données et un signal de demande de réception de données en provenance dudit microprocesseur maître (1) vers ledit microprocesseur esclave (2) ;
une seconde ligne de commande (4) pour envoyer un signal de demande de transmission de données et un signal de demande de réception de données en provenance dudit microprocesseur esclave (2) vers ledit microprocesseur maître (1) ; et
une troisième ligne de commande (6) pour envoyer un signal d'inhibition/autorisation de transmission de données en provenance dudit microprocesseur maître (1) vers ledit microprocesseur esclave (2) pour inhiber/autoriser la transmission de données en provenance dudit microprocesseur esclave (2).

2. Appareil de transfert de données selon la revendication 1, dans lequel ledit bus de données bidirectionnel (5) est du type série.

3. Appareil de transfert de données selon la revendication 1, dans lequel ledit bus de données bidirectionnel (5) est du type parallèle.

4. Appareil de transfert de données selon la revendication 1, dans lequel le microprocesseur maître (1) rend la première ligne de commande (3) active et la troisième ligne de commande (6) comme étant dans l'état d'inhibition avant que le microprocesseur maître (1) n'envoie des données.

5. Appareil de transfert de données selon la revendication 1, dans lequel le microprocesseur esclave (2) confirme un état de la troisième ligne de commande (6) et rend la seconde ligne de commande (4) active si l'état de la troisième ligne de commande (6) est admissible avant que le microprocesseur esclave (2) n'envoie des données.
